Europäisches Patentamt

European Patent Office

Office européen des brevets

(11) Numéro de publication : **0 016 686**
**B1**

(12) **FASCICULE DE BREVET EUROPÉEN**

(45) Date de publication du fascicule du brevet :
24.11.82

(51) Int. Cl.³ : **B 60 C 9/18**, B 60 C 9/20

(21) Numéro de dépôt : 80400319.2

(22) Date de dépôt : 11.03.80

(54) **Pneumatique pour véhicule.**

(30) Priorité : 14.03.79 FR 7906680

(43) Date de publication de la demande :
01.10.80 (Bulletin 80/20)

(45) Mention de la délivrance du brevet :
24.11.82 Bulletin 82/47

(84) Etats contractants désignés :
BE CH DE GB IT LU NL SE

(56) Documents cités :
DE A 2 355 338
DE A 2 518 223
FR A 1 290 231
FR A 1 349 247
FR A 2 369 502
IT A 514 343
US A 3 931 844

Le dossier contient des informations techniques présentées postérieurement au dépôt de la demande et
ne figurant pas dans le présent fascicule.

(73) Titulaire : PNEUMATIQUES, CAOUTCHOUC, MANU-
FACTURE ET PLASTIQUES KLEBER-COLOMBES
Société anonyme dite:
Place de Valmy
F-92700 Colombes (FR)

(72) Inventeur : Martinet, Roland
5, Avenue St-Joseph
F-92600 - Asnières (FR)

(74) Mandataire : Lernould, René et al.
6 Avenue Kléber
F-75116 Paris (FR)

## Pneumatique pour véhicule

L'invention concerne des perfectionnements aux pneumatiques à carcasse radiale et à ceinture de sommet destinés spécialement à l'équipement des véhicules susceptibles de rouler à des vitesses élevées et tels que les voitures de tourisme, les voitures de sports et de compétition, les avions.

Un type de ceinture de sommet particulièrement approprié à ces pneus comprend au moins deux nappes de câblés orientés suivant des angles faibles de l'ordre de 20° par rapport au plan équatorial, dont une nappe non pliée de largeur approximativement égale à la largeur de la surface de roulement et une nappe plus large dont les bords latéraux sont repliés axialement vers l'intérieur et appliqués contre une face de l'autre nappe. Ce type de ceinture est illustré par exemple dans les brevets FR. A 1.228.241, FR. A 2.235.810 et FR. A 2.389.502. Appliqué aux pneus de véhicules rapides ici considérés ce type de ceinture présente une bonne résistance aux efforts développés lors du roulage à grande vitesse, notamment dans les zones latérales voisines des bords de la ceinture, et il confère au pneu d'excellentes qualités routières.

Cependant, dans le cas des pneus dits à basse section (c'est-à-dire des pneus dans lesquels le rapport de la hauteur H de la section sur la largeur G du boudin est inférieur à 0,8) on a constaté une moins bonne répartition des pressions de contact au sol du fait de la largeur relativement grande de la surface de roulement. Il en résulte notamment une tendance à une usure plus accentuée de la région centrale de la bande de roulement, où les pressions de contact au sol sont plus faibles et une sensibilité un peu plus marquée à l'aquaplanage sur les routes couvertes d'eau.

L'invention a pour objet de perfectionner ces pneus de façon à éviter les inconvénients ci-dessus indiqués sans pour autant compromettre les autres qualités routières obtenues grâce à ce type de ceinture de sommet. L'invention concerne donc un pneumatique à section basse inférieure à 0,8 du type à carcasse radiale et à ceinture de sommet comprenant au moins deux nappes de câblés orientés suivant des angles faibles de l'ordre de 20° par rapport au plan équatorial dont une nappe non pliée de largeur approximativement égale à la largeur de la surface de roulement et une nappe plus large dont les bords latéraux sont repliés, axialement vers l'intérieur et appliqués contre une face de l'autre nappe, caractérisé en ce que les deux nappes de la ceinture sont espacées radialement par une couche de gomme confinée entre les deux nappes en s'étendant transversalement jusque dans les replis de la nappe à bords pliés et dont l'épaisseur décroît vers les bords de la ceinture, cette couche de gomme présentant une section de forme lenticulaire telle que la nappe supérieure de la ceinture présente une courbure transversale convexe moyenne de rayon inférieur au rayon de la courbure transversale de la nappe inférieure de la ceinture.

Selon les brevets antérieurs précités, une ceinture du type comprenant une nappe non pliée et une nappe plus large à bords repliés peut être complétée avec une ou plusieurs nappes intermédiaires non pliées en cordes orientées obliquement, contribuant à augmenter la résistance globale de la ceinture, en particulier pour les pneus de grande dimension. Mais ces nappes intermédiaires en cordes obliques ne modifient pas sensiblement la courbure transversale de la ceinture, de sorte qu'elles ne peuvent être assimilées à la couche de gomme lenticulaire confinée entre les nappes de ceinture telle que définie plus haut.

Il a été proposé d'autre part dans le brevet FR. A 1.290.231 d'interposer entre des nappes non pliées de ceinture en cordes orientées obliquement, un coussin de gomme à section de forme lenticulaire de faible dureté pour permettre au pneu d'absorber plus facilement les petits obstacles par déformation élastique locale de la ceinture. Mais le coussin intermédiaire de gomme n'est pas confiné par des nappes de ceinture à bords repliés de sorte que lorsqu'il est comprimé radialement par la charge sur la roue il peut accentuer la tendance à la séparation des bords des nappes de ceinture.

Des exemples de réalisation de pneus perfectionnés selon l'invention sont décrits ci-dessous en référence au dessin dans lequel :

La figure 1 représente la section d'un pneu comprenant une ceinture perfectionnée,

Les figures 2 et 3 représentent des diagrammes comparatifs des pressions de contact pour ce pneu par rapport à un pneu témoin,

Les figures 4 à 13 représentent des variantes de construction de ceinture comprenant la caractéristique principale de l'invention.

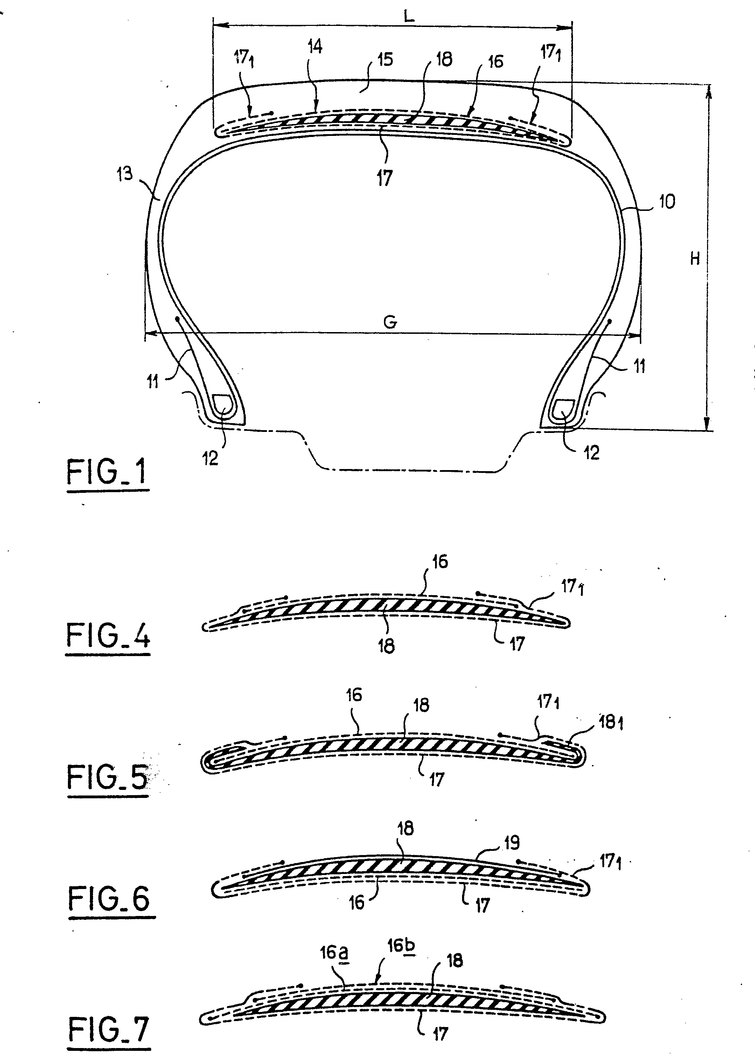

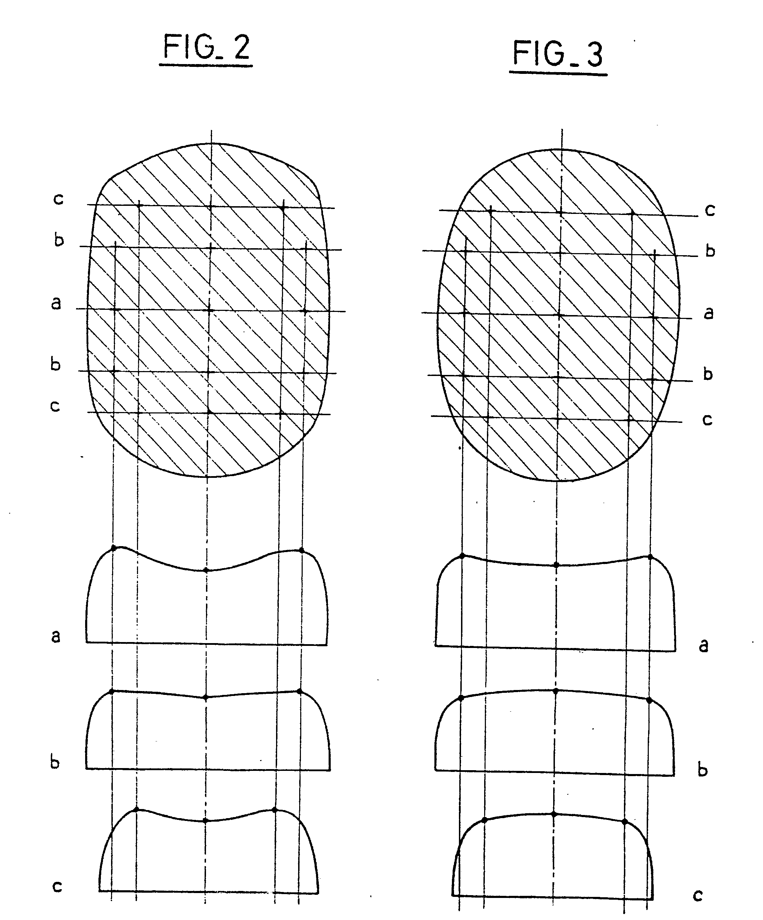

Le pneumatique illustré sur la figure 1 comprend une carcasse 10 constituée d'une ou plusieurs nappes de tissu « cord » en câblés souples tels que les câblés de rayonne, nylon polyamide aromatique, polyester, fibre de verre ou métal, ces câblés étant orientés suivant des plans radiaux ou presque radiaux. Les bords 11 des nappes de carcasse sont repliés autour des tringles 12 des bourrelets. La carcasse est recouverte sur les côtés par les bandes de flancs en caoutchouc 13 et elle porte à son sommet une ceinture 14 inextensible dans le sens circonférenciel. La ceinture est recouverte par la bande de roulement en caoutchouc 15 ayant les sculptures appropriées à l'utilisation du pneu et elle présente dans son ensemble une largeur L approximativement égale ou légèrement supérieure à la largeur de la surface de roulement de la bande 15.

Lorsque le pneu est monté sur une jante normale et gonflé à sa pression d'utilisation il présente une forme de section à profil bas dans lequel le rapport de la hauteur H sur la largeur G de la section est égal ou inférieur à 0,8 avec une surface de roulement relativement large et plate ou peu bombée dans le sens transversal, son rayon de courbure transversal étant en tous cas supérieur au rayon de la courbure longitudinale correspondant au diamètre du pneu.

La ceinture de sommet 14 est constituée d'au moins deux nappes de tissu cord 16-17 en câblés souples parallèles orientées en sens inverse suivant des angles faibles, de l'ordre de 20° environ par rapport au plan équatorial du pneu. La nappe 16 est une nappe annulaire non pliée ayant une largeur un peu inférieure à la largeur L de la ceinture tandis que la nappe 17 présente une largeur développée nettement plus grande et ses bords latéraux 17.1 sont repliés autour des bords de la nappe 16 et rabattus contre la face supérieure de cette dernière. De préférence la largeur développée de la nappe 17 n'est pas supérieure à 1,5 fois la largeur de la ceinture afin que les extrémités des bords repliés 17.1 soient espacés transversalement l'une de l'autre d'une distance au moins égale à la moitié de la largeur L de la ceinture. Suivant la dimension du pneu la largeur des bords repliés 17.1 est donc de l'ordre de 15 à 70 millimètres environ afin de bien recouvrir les bords de la nappe 16 et de renforcer et de raidir les zones latérales de la ceinture.

Entre les deux nappes 16-17 de la ceinture est insérée une couche de gomme 18 qui présente une épaisseur maximum dans la zone centrale de la ceinture et qui va en s'amincissant vers les bords. Sa largeur est approximativement égale à celle de la nappe non pliée 16 de sorte que les bords amincis de cette couche de gomme s'étendent jusqu'au fond des replis de la nappe 17. L'épaisseur de cette couche de gomme 18 est, dans la partie centrale du pneu, de l'ordre de 2,5 à 6 mm environ de sorte qu'elle donne à la nappe supérieure 16 de la ceinture une convexité transversale accentuée ayant un rayon de courbure moyen inférieur au rayon de courbure transversale de la nappe 17.

La nappe 17 adjacente à la carcasse 10 présente donc une courbure transversale moins accentuée dont le rayon est égal ou supérieur au rayon de sa courbure longitudinale, avec un tracé sensiblement parallèle à celui de la surface de roulement.

Du fait de l'espacement radial des deux nappes 16-17 par la couche de gomme interposée 18, la ceinture présente une résistance à la flexion vers l'intérieur qui est plus élevée que celle d'une ceinture du même type n'ayant pas cette couche de gomme et cela d'autant plus que la couche de gomme 18 est confinée entre les deux nappes 16-17 dont les parties latérales sont solidarisées par le repliage des bords 17.1. Il en résulte pratiquement que dans la zone de contact du pneu sur le sol, la rigidité flexionnelle accrue de la ceinture empêche cette ceinture de prendre une contre-courbure aussi bien dans le sens transversal que dans le sens longitudinal. Cela tend à mieux répartir les pressions de contacts dans l'empreinte, donc à mieux uniformiser l'usure et à réduire la sensibilité à l'aquaplanage.

Les figures 2 et 3 montrent des diagrammes établis d'après des relevés des pressions de contact, en différents points sur les lignes transversales a, b, c des empreintes au sol d'un pneu témoin et d'un pneu selon l'invention ayant des ceintures de même type, l'une sans et l'autre avec la couche de gomme lenticulaire 18 selon la figure 1. On voit que les courbes de la figure 3 sont beaucoup plus plates et qu'elles ont moins tendance à s'infléchir au centre par rapport à celles du pneu témoin de la figure 2.

Les mêmes pneus soumis aux autres essais comparatifs habituels de tenue à grande vitesse, endurance, tenue de route, freinage et confort montrent que les pneus ayant la construction de ceinture selon la figure 1 ont des propriétés aussi bonnes ou un peu meilleures que celles des pneus témoins. En effet, la forme lenticulaire du profilé intercalaire 18 présente par rapport à d'autres solutions, au moins les deux avantages suivants : d'une part elle augmente très peu la rigidité transversale de la ceinture dans son plan, ce qui permet de ne pas diminuer les qualités de tenue de route du pneu inhérentes à ce type de ceinture repliée. D'autre part, elle n'augmente pas sensiblement les épaisseurs sur les côtés de la ceinture, ce qui aurait pour conséquence de dégrader les qualités de tenue à grande vitesse et les qualités d'endurance des pneus ayant ce type de ceinture.

Des variantes de construction de la ceinture de la figure 1 peuvent être réalisées dans le but d'ajuster ou d'améliorer certaines caractéristiques du comportement des pneus selon les utilisations auxquelles ils sont destinés.

Ainsi la figure 4 montre une construction de ceinture à bords repliés du même genre mais dans laquelle la couche intercalaire de gomme 18 est plus large que la nappe non pliée 16 de façon à déborder de chaque côté. Les replis latéraux de la nappe 17 sont ainsi éloignés quelque peu des bords latéraux de la nappe 16 de façon à graduer la rigidité des bords de la ceinture soit dans le but de réaliser une ceinture globalement plus large que la surface de roulement pour améliorer la propriété de tenue de route du pneu, soit dans le but d'améliorer la résistance au décollement des bords de la ceinture à grande vitesse. La figure 5 montre une autre réalisation dans laquelle la couche de gomme intercalaire 18 présente une largeur développée plus grande que la largeur de la nappe non pliée 16 et ses bords 18.1 sont repliés autour des bords de ladite nappe 16 afin de les espacer du fond des replis de la nappe 17. Dans cette réalisation la couche de gomme 18 présente plus avantageusement une largeur développée comprise entre la largeur 17 de la nappe 16 et la largeur de la nappe 17 de sorte que les parties repliées 18.1 de la couche de gomme sont complètement enveloppées et recouvertes par les bords pliés 17.1 de la nappe 17.

Les figures 6 et 7 illustrent des exemples de réalisation de ceinture comprenant plus de deux nappes de câblés et une couche de gomme intercalée entre deux de ces nappes. Dans la figure 6 les deux premières nappes sont respectivement une nappe large à bords pliés 17 et une nappe non pliée 16 appliquée l'une contre l'autre. Une troisième nappe 19 est posée au-dessus de la couche de gomme 18 et ses bords sont recouverts par les bords pliés 17.1 de la première nappe. Dans une telle construction les câblés des deux nappes adjacentes 16-17 sont orientés en sens inverse suivant des angles faibles de l'ordre de 20° tandis que les câblés de la nappe supérieure 19 peuvent être orientés suivant un angle plus grand de l'ordre de 60 à 90°. Dans la figure 7 la couche de gomme 18 est insérée entre la première nappe à bords repliés 17 et un ensemble de deux nappes superposées 16a et 16b pouvant avoir des largeurs décroissantes et dont les bords sont recouverts par les bords pliés de la nappe 17. Toutes ces nappes ou au moins deux d'entre elles ont leurs câblés orientés en sens inverse suivant des angles faibles de l'ordre de 20°.

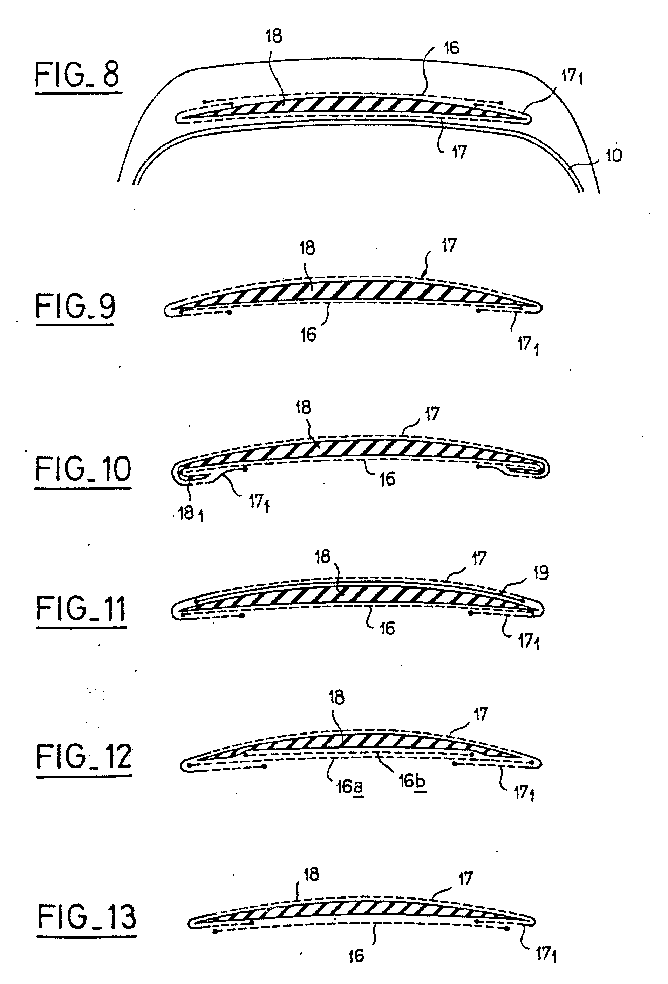

La figure 8 montre encore une autre réalisation dans laquelle seuls les bords de la couche de gomme 18 sont insérés dans les replis de la nappe 17 tandis que la nappe supérieure 16 à ses bords superposés aux bords pliés 17.1 de cette nappe.

D'autres variantes de construction peuvent se déduire des exemples de réalisation ci-dessus décrits. On peut par exemple modifier ces constructions de façon que les bords pliés 17.1 de la nappe 17 soient rabattus sur la face inférieure de la ceinture au lieu d'être rabattus du côté de la face supérieure, afin que ces bords pliés 17.1 soient pris entre le sommet de la carcasse 10 et la ceinture elle-même. De telles constructions sont particulièrement favorables pour les utilisations à grande vitesse. Les figures 9 à 13 illustrent schématiquement plusieurs réalisations de ce genre qui correspondent respectivement aux réalisations des figures 1, 5, 6, 7 et 8 mais inversées, avec les bords 17.1 de la nappe large repliés sur la face intérieure de la ceinture.

Pour la couche de gomme 18 on peut utiliser des mélanges caoutchouteux de type courant. Du fait que cette couche de gomme est confinée à l'intérieur de la ceinture et par les bords repliés 17.1, sa rigidité propre ne paraît pas être essentielle encore que la dureté du mélange puisse être choisie pour ajuster certaines propriétés des pneus aux usages envisagés. Il est cependant plus avantageux de choisir des compositions de mélange à faible hystérésis, dégageant peu de chaleur en service du pneu.

Pour les nappes de ceinture 16, 17, 18 et 19 on peut utiliser les câblés textile habituels tels que les câblés de rayonne, nylon, polyester, aramides, les câblés de verre ou les câblés métalliques. Toutes les nappes peuvent être constituées avec les mêmes câblés ou certaines peuvent être constituées de câblés différents de ceux des autres nappes. Une association particulièrement avantageuse consiste à utiliser pour toutes les nappes des câblés à haut module et à haute ténacité pour conférer à la ceinture une grande résistance à l'extension dans le sens circonférenciel et une raideur élevée dans son plan, ce qui est favorable à l'obtention d'une bonne tenue de route et d'une faible dérive. Dans ce cas on utilisera de préférence des câblés métalliques pour les nappes non pliées et des câblés textile en aramide pour les nappes à bords pliés.

## Revendications

1. Pneumatique à section basse inférieure à 0,8 du type à carcasse radiale et à ceinture de sommet (14) comprenant au moins deux nappes de câblés orientés suivant des angles faibles de l'ordre de 20° par rapport au plan équatorial dont une nappe non pliée (16 ou 19) de largeur approximativement égale à la largeur de la surface de roulement et une nappe plus large (17) dont les bords latéraux (17.1) sont repliés, axialement vers l'intérieur et appliqués contre une face de l'autre nappe, caractérisé en ce que les deux nappes de la ceinture sont espacées radialement par une couche de gomme (18) confinée entre les deux nappes en s'étendant transversalement jusque dans les replis de la nappe à bords pliés (17) et dont l'épaisseur décroît vers les bords de la ceinture, cette couche de gomme présentant une section de forme lenticulaire telle que la nappe supérieure de la ceinture présente une courbure transversale convexe moyenne de rayon inférieur au rayon de la courbure transversale de la nappe inférieure de la ceinture.

2. Pneu selon la revendication 1 dans lequel aussi bien les bords de la nappe non pliée (16) de la ceinture que les bords amincis de la couche de gomme intermédiaire (18) sont insérés dans les replis de la nappe (17) à bords repliés.

3. Pneu selon les revendications 1 ou 2, dans lequel la couche de gomme intermédiaire (18) présente une largeur plus grande que la largeur de la nappe non pliée (16) de la ceinture.

4. Pneu selon la revendication 3 dans lequel les bords amincis de la couche de gomme (18) sont repliés autour des bords de la nappe non pliée (16).

5. Pneu selon la revendication 4 dans lequel la couche de gomme (18) présente une largeur développée comprise entre la largeur de la nappe non pliée (16) et la largeur de la nappe à bords pliés (17), les bords repliés (18.1) de la couche de gomme (18) étant recouverts par les bords repliés (17.1) de nappe pliée (17).

6. Pneu selon l'une des revendications précédentes et dans lequel la nappe supérieure à plus forte convexité de la ceinture est une nappe non pliée (16) en câblés métalliques tandis que la nappe inférieure à plus faible convexité est une nappe large (17) en câblés textile dont les bords 17.1 sont repliés et rabattus contre une face de la nappe supérieure non pliée (16).

7. Pneu selon l'une des revendications de 1 à 5, dans lequel la nappe supérieure à plus forte convexité de la ceinture est une nappe large (17) dont les bords (17.1) sont repliés vers le dessous de la ceinture et appliqués contre une face de la nappe inférieure (16) à plus faible convexité.

## Claims

1. A tyre having a profile lower than 0.8, of the kind comprising a radial carcass and a tread belt (14), comprising at least two plies of cords directed along small angles of the order of 20° with respect to the equatorial plane, one non-folded ply (16 or 19) of which has a width approximately equal to the width of the rolling surface, and a larger ply (17) of which has its lateral edges (17.1) folded over axially towards the inside and applied against a surface of the other ply, characterised in that the two plies of the belt are radially spaced apart by a rubber layer (18) confined between the two plies whilst extending transversely as far as into the folds of the ply having folded edges (17) and the thickness of which decreases towards the edges of the belt, this rubber layer having a cross-section of lenticular form such that the upper ply of the belt has a mean convex transverse curvature having a smaller radius than the radius of the transverse curvature of the lower ply of the belt.

2. A tyre according to claim 1, in which the edges of the non-folded ply (16) of the belt, as well as the attenuated edges of the intermediate rubber layer (18) are inserted into the folds of the ply (17) having folded-over edges.

3. A tyre according to claim 1 or 2, in which the intermediate rubber layer (18) has a greater width than the width of the non-folded ply (16) of the belt.

4. A tyre according to claim 3, in which the attenuated edges of the rubber layer (18) are folded around the edges of the non-folded ply (16).

5. A tyre according to claim 4, in which the rubber layer (18) has a developed width of an extent between the width of the non-folded ply (16) and the width of the ply (17) having folded-over edges, the folded-over edges (18.1) of the rubber layer (18) being covered by the folded-over edges (17.1) of the folded ply (17).

6. A tyre according to one of the preceding claims and in which the upper ply having a greater convexity of the belt is a non-folded ply (16) of metal cords, whereas the lower ply of lesser convexity is a wide ply (17) of textile cords the edges (17.1) of which are folded over and laid down against one surface of the upper non-folded ply (16).

7. A tyre according to one of the claims 1 to 5, in which the upper ply having a greater convexity of the belt is a wide ply (17) the edges (17.1) of which are folded over towards the underside of the belt and applied against a surface of the lower ply (16) having a lesser convexity.

## Ansprüche

1. Niederquerschnittsreifen mit einem Höhen/Breitenverhältnis unter 0,8 mit Radialkarkasse und Reifenscheitel-Verstärkungsgürtel (14), mit mindestens zwei Lagen aus Kabeln einer solchen Richtung enthält, daß sie mit der Äquatorialebene kleine Winkel von ca. 20° bilden, nämlich eine nicht umgeschlagene Lage (16 oder 19), deren Breite annähernd gleich der Breite der Lauffläche ist, und eine breitere Lage (17), deren Seitenränder (17.1) axial nach innen umgeschlagen sind, dadurch gekennzeichnet, daß die beiden Lagen des Gürtels durch eine von den beiden Lagen begrenzte Gummischicht (18) radial im Abstand voneinander gehalten sind, die sich in Querrichtung bis in den Umschlagbug der Lage (17) mit den umgeschlagenen Rändern erstreckt und deren Dicke in Richtung auf die Ränder des Gürtels abnimmt, wobei der linsenförmige Querschnitt der Gummischicht derartig ausgelegt ist, daß die Oberlage des Gürtels eine mittlere konvexe Querkrümmung aufweist, deren Radius kleiner ist als der Radius der Querkrümmung der unteren Lage des Gürtels.

2. Reifen nach Anspruch 1, bei dem sowohl die Ränder der nicht umgeschlagenen Lage (16) des Gürtels als auch die verjüngten Ränder der zwischengelegten Gummischicht (18) in die Umschlagfalten der Lage (17) mit umgeschlagenen Rändern eingelegt sind.

3. Reifen nach Anspruch 1 oder 2, bei dem die zwischengelegte Gummischicht (18) breiter ist als die nicht umgeschlagene Lage (16) des Gürtels.

4. Reifen nach Anspruch 3, bei dem die verjüngten Ränder der Gummischicht (18) um die Ränder der nicht umgeschlagenen Lage (16) herumgelegt sind.

5. Reifen nach Anspruch 4, bei dem die Abwicklungsbreite der Gummischicht (18) zwischen der Breite der nicht umgeschlagenen Lage (16) und der Breite der Lage (17) mit umgeschlagenen Rändern liegt, wobei die umgeschlagenen Ränder (18.1) der Gummischicht (18) durch die umgeschlagenen Ränder (17.1) der Lage (17) mit diesen umgeschlagenen Rändern abgedeckt sind.

6. Reifen nach einem der vorstehenden Ansprüche, bei dem die obere Lage (16) größerer Konvexität des Gürtels eine nicht umgeschlagene Lage aus Metallkabeln ist, während die untere Lage (17) mit geringerer Konvexität eine breite Lage aus Textilkabeln ist, deren Ränder (17.1) umgeschlagen sind und auf einer Oberfläche der oberen, nicht umgeschlagenen Lage in Anlage sind.

7. Reifen nach einem der Ansprüche 1 bis 5, bei dem die obere Lage mit größerer Konvexität des Gürtels eine breite Lage (17) ist, deren Ränder (17.1) zum Unterteil des Gürtels hin umgeschlagen sind und an einer Oberfläche der unteren Lage (16) geringerer Konvexität anliegen.

0 016 686

FIG_1

FIG_4

FIG_5

FIG_6

FIG_7

1

0 016 686

## FIG_2 FIG_3

2

FIG_8

FIG_9

FIG_10

FIG_11

FIG_12

FIG_13